**Europäisches Patentamt**

**European Patent Office**

**Office européen des brevets**

(19)

(11) Veröffentlichungsnummer: **0 1 1 1 264**
**B1**

(12) **EUROPÄISCHE PATENTSCHRIFT**

(45) Veröffentlichungstag der Patentschrift:
**27.08.86**

(51) Int. Cl.⁴: **G 02 B 6/42**

(21) Anmeldenummer: **83112093.6**

(22) Anmeldetag: **01.12.83**

(54) **Sende- und/oder Empfangsvorrichtung für Einrichtungen der elektrooptischen Nachrichtenübertragung.**

(30) Priorität: **03.12.82 DE 3244867**

(43) Veröffentlichungstag der Anmeldung:
**20.06.84 Patentblatt 84/25**

(45) Bekanntmachung des Hinweises auf die Patenterteilung:
**27.08.86 Patentblatt 86/35**

(84) Benannte Vertragsstaaten:
**AT BE CH DE FR GB IT LI NL SE**

(56) Entgegenhaltungen:
**CA - A - 1 108 900**
**DE - A - 3 010 820**
**GB - A - 2 034 068**
**US - A - 4 119 363**

**PATENTS ABSTRACTS OF JAPAN, Band 6, Nr.**
**189(E-133)(1067), 28. September 1982, Seite 2E133**
**PATENTS ABSTRACTS OF JAPAN, Band 3, Nr.**
**96(E-130), 15. August 1979, Seite 97E130**

(73) Patentinhaber: **Siemens Aktiengesellschaft Berlin und München, Wittelsbacherplatz 2, D-8000 München 2 (DE)**

(72) Erfinder: **Taumberger, Franz, Stiftsbogen 118, D-8000 München 70 (DE)**

## Beschreibung

Die Erfindung bezieht sich auf eine Sende- und/oder Empfangsvorrichtung für Einrichtungen der elektrooptischen Nachrichtenübertragung, mit einer elektrische Schaltmittel enthaltenden Anordnung, die in einem Metallgehäuse untergebracht ist und mit einer Durchführung eines als Glasfaser ausgebildeten Lichtwellenleiters durch eine Aussenwand des Metallgehäuses.

Eine derartige Vorrichtung ist z. B. aus TELCOM-Report 2 (1979), Beiheft «Digital-Übertragungstechnik», Seite 114 bekannt.

Bei derartigen Sende- und/oder Empfangsvorrichtungen kann es, insbesondere im Hinblick auf eine Verwendung ungeschützter Halbleiterbauelemente erforderlich werden, ein Schaltungsmodul mit optisch gekoppeltem, durch eine Glasfaser gebildeten Lichtwellenleiter in einem hermetisch dichten Metallgehäuse unterzubringen. In diesem Fall ist eine hermetisch dichte Durchführung der Glasfaser durch eine Aussenwand des Metallgehäuses erforderlich.

Man kann eine Pigtail-Durchführung durch Kleben herstellen. Dabei lässt sich jedoch eine hermetisch dichte Durchführung nicht ohne weiteres erzielen. Eine Pressdichtung ist mit relativ grossen mechanischen Belastungen der Faser verbunden und für verschiedene Anwendungsfälle nicht ausreichend schockbeständig. Schliesslich haben Untersuchungen im Rahmen der Erfindung ergeben, dass sich beim Löten mit einem Löttropfen eine schlechte Benetzung der Glasfasr durch schlechten Wärmeübergang an der Faser ergeben kann.

Aufgabe der Erfindung ist es, eine Sende- und/oder Empfangsvorrichtung der eingangs genannten Art derart auszubilden, dass sich eine hermetisch dichte Durchführung der Glasfaser durch die Aussenwand des Metallgehäuses ergibt.

Gemäss der Erfindung wird die Sende- und/oder Empfangsvorrichtung zur Lösung dieser Aufgabe derart ausgebildet, dass in die Aussenwand des Metallgehäuses zur hermetisch dichten Durchführung der Glasfaser ein metallenes Rohr eingesetzt ist und dass auf das Rohr ein metallenes, muffenförmiges Reduzier-Verbindungsstück aufgesetzt ist, das auf seiten des grösseren Innendurchmessers mit der Aussenfläche des Rohres und auf seiten des kleineren Innendurchmessers mit der durch das Verbindungsstück und durch das Rohr hindurchgeführten und wenigstens im Bereich des Verbindungsstückes metallisierten Glasfaser mittels Lötverbindungen hermetisch dicht verbunden ist. Die Metallisierung der Glasfaser erstreckt sich vorzugsweise von der Stirnseite bis etwas über das Verbindungsstück hinaus.

Durch diese Massnahmen ergibt sich eine besonders hochwertige hermetisch dichte Durchführung der Glasfaser durch die Metallwand. Von besonderem Vorteil ist die gute Benetzung der Faser im kleinen Lötspalt und der besonders gute Wärmeübergang vom Verbindungsstück zur Glasfaser. Darüber hinaus ist die kurze Ausnehmung in dem Verbindungsstück erheblich leichter zu vergolden als das unvermeidlich längere Durchführungsrohr im Gehäuse.

In weiterer Ausgestaltung der Erfindung wird das Verbindungsstück derart bemessen, dass es vor dem Verlöten auf dem Rohr leicht verschiebbar ist. Bei einer derartigen Ausgestaltung der Sende- und/oder Empfangsvorrichtung lässt sich das Ende der Glasfaser vor dem zugeordneten Sende- und/oder Empfangselement durch einfaches Verschieben des Verbindungsstückes auf einfache Weise fein justieren.

In Weiterbildung der Erfindung ist das Verbindungsstück ausserhalb des Gehäuses auf das Rohr aufgesetzt. Ein bevorzugtes Verfahren zur Herstellung einer Sende- und/oder Empfangsvorrichtung mit einem derart angeordneten Verbindungsstück besteht darin, dass das Verbindungsstück zuerst an der Glasfaser angelötet wird und dass die vorbereitete Glasfaser in das Rohr eingefädelt und das Verbindungsstück über das Rohr geschoben wird und dass das Verbindungsstück nach Justierung und Fixierung der Glasfaser im Gehäuse mit dem Rohr flussmittelfrei verlötet wird.

Andererseits kann es sich als zweckmässig erweisen, das Verbindungsstück im Inneren des Gehäuses auf das Rohr aufzusetzen.

Ein Verfahren zur Herstellung einer Sende- und/oder Empfangsvorrichtung, das sowohl bei einer Anordnung des Verbindungsstückes innerhalb des Gehäuses als auch bei einer Anordnung des Verbindungsstückes ausserhalb des Gehäuses vorteilhaft verwendbar ist, besteht, in weiterer Ausgestaltung der Erfindung darin, dass das Verbindungsstück bei der Herstellung des Gehäuses auf das Rohr aufgesetzt und angelötet wird und dass die Glasfaser in das Rohr eingefädelt und nach Justierung im Gehäuse fixiert wird und dass die Glasfaser nach der Fixierung an dem Verbindungsstück verlötet wird.

In Weiterbildung der Erfindung besteht die Metallisierung der Glasfaser aus mehreren Schichten, wobei auf eine Chromschicht eine Platinschicht und auf diese eine Goldschicht und eine Schicht aus einer Zinn-Blei-Legierung folgen.

Die Erfindung wird anhand der in den Figuren dargestellten Ausführungsbeispiele näher erläutert.

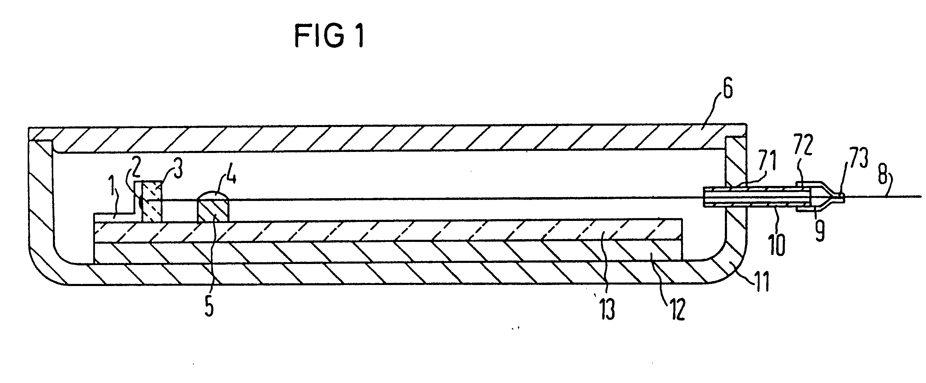

Fig. 1 zeigt den Aufbau einer Empfangsvorrichtung, bei der eine PIN-Diode in einem hermetisch dicht gekapselten Schaltungsmodul angeordnet und mit einer Glasfaser optisch gekoppelt ist.

Einzelheiten der Empfangsvorrichtung nach Fig. 1 gehen aus den Fig. 2 und 3 hervor. Dabei zeigen:

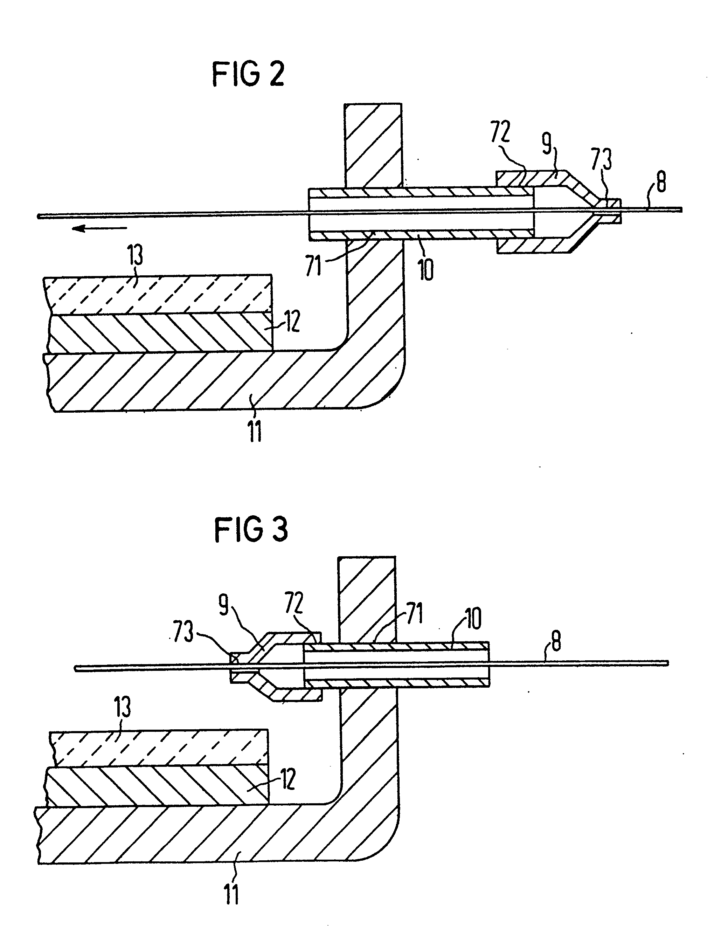

Fig. 2 weitere Einzelheiten der Durchführung der Glasfaser durch die Aussenwand eines hermetisch dichten Metallgehäuses, und

Fig. 3 eine Abwandlung der in Fig. 1 gezeigten Empfangsvorrichtung in der Weise, dass das Verbindungsstück im Innern anstatt ausserhalb des metallischen Gehäuses angeordnet ist.

Die in Fig. 1 gezeigte Empfangsvorrichtung ist in dem Metallgehäuse 11 untergebracht, das mit dem Deckel 6 verschlossen ist. Auf dem Boden des quaderförmigen Metallgehäuses 11 liegt das Abstandsstück 12. Das Abstandsstück 12 trägt das Schaltungsmodul 13, das von plattenförmiger Gestalt ist und das in dem durch das Abstandsstück 12 vorgegebenen Abstand parallel zum Boden des Metallgehäuses 11 angeordnet ist.

.In einer Seitenwand des Metallgehäuses 11 ist das Rohr 10 angebracht, das nach aussen und nach innen über die Seitenwand des Metallgehäuses 11 hinausragt. Aussen ist auf das Rohr 10 das muffenförmige Verbindungsstück 9 aufgesetzt, das mit der grösseren Öffnung auf das Rohr aufgesetzt ist und in dessen kleinerer Öffnung der Lichtwellenleiter 8 geführt ist. Der Lichtwellenleiter 8 verläuft durch das Verbindungsstück 9, das Rohr 10 und über den Klotz 5 durch eine Öffnung im Diodenträger 3 zum optischen Fenster der PIN-Fotodiode 2. Der durch eine Glasfaser gebildete Lichtwellenleiter 8 ist dabei an zwei Stellen fixiert, nämlich auf dem Klotz 5 und im Innern des Verbindungsstückes 9 an der Stelle, wo das muffenförmige Verbindungsstück den kleineren Innendurchmesser hat.

Der Diodenträger 3 ist mit zwei Metallwinkeln 1 auf dem Schaltungsmodul 13 befestigt. Die beiden Metallwinkel 1, von denen in Fig. 1 nur einer sichtbar ist, befinden sich dabei neben der PIN-Diode 2.

Die verwendete PIN-Fotodiode 2 hat ein optisches Fenster mit einem Durchmesser von etwa 30 bis 200 μm in der Mitte der Rückseitenkontaktierung und gegenüber auf der Vorderseite ein Bondpad.

Das Lichtwellenleiter-Empfangsmodul 13 ist in einem hermetisch dichten, metallischen Gehäuse 11 untergebracht. Das Metallgehäuse 11 ist mit einer hermetisch dichten Glasfaserdurchführung versehen, so dass sich ein sogenannter Pigtail-Anschluss für die optische Übertragung ergibt. Die hermetische Kapselung, die zur Schirmung und/oder zum Korrosionsschutz dient, ist insbesondere bei einem Einsatz von ungeschützten Halbleiterbauelementen, insbesondere Halbleiterchips zweckmässig.

Die Glasfaserdurchführung besteht aus dem in die Aussenwand des Gehäuses 11 eingesetzten Rohr 10 und dem auf das Rohr 10 aufgesetzten Verbindungsstück 9.

Nach dem Einbau des Schaltungsmoduls 13 in das Gehäuse 11 wird die Glasfaser 8 durch die Durchführung gefädelt und an die PIN-Fotodiode 2 optisch gekoppelt. Der Lichtwellenleiter 8 wird dabei vor dem optischen Fenster exakt justiert und anschliessend auf dem Klotz 5 fixiert.

Um eine hermetische Dichtung zu erreichen, wird die Glasfaser in das Verbindungsstück 9 eingelötet. Der kleinere Lochdurchmesser im Verbindungsstück 9 ist etwa 120 μm grösser als der Durchmesser der Glasfaser. Für eine Glasfaser mit einem Aussendurchmesser von 125 μm ist ein Lochdurchmesser von etwa 150 μm im Verbindungsstück 9 zweckmässig. Das Rohr 10 hat in vorteilhafter Weise einen wesentlich grösseren Innendurchmesser, insbesondere etwa >0,5 mm.

Das Verbindungsstück 9 hat die Form einer Muffe und sorgt als sogenannte Lötmuffe für einen Übergang von einem grossen auf einen kleinen Durchmesser. Es besteht aus zwei Hohlzylindern mit einem dazwischenliegenden hohlkegelförmigen Teil und ist innen mit einer lötbaren Oberfläche versehen. Die Muffe hat in allen Bereichen etwa die gleiche Wandstärke. Der eine Hohlzylinder passt auf das Rohr. In den anderen Hohlzylinder passt die Glasfaser, so dass sich ein Übergang vom Innendurchmesser des Rohres auf den Aussendurchmesser der Glasfaser ergibt.

Dadurch ergibt sich ein sehr kleiner Lötspalt mit einem besonders guten Wärmeübergang von der Lötmuffe zur Glasfaser 8. Aus diesem Grunde ist die hermetische Kapselung des Gehäuses 11 mit Hilfe des Verbindungsstückes 9 erheblich erleichtert.

Bei der in Fig. 2 gezeigten Vorrichtung befindet sich das Verbindungsstück 9 ausserhalb des Gehäuses 11. Diese Vorrichtung wird vorzugsweise auf die folgende Art hergestellt:

Zunächst wird die Lötmuffe bzw. das Verbindungsstück 9 an der Glasfaser 8 angelötet. Dann wird die vorbereitete Glasfaser ε insbesondere mit einer Metallisierung mit aufeinanderfolgenden Schichten aus Chrom, Platin und Gold bedampft und mit einer Legierung aus Zinn und Blei tauchverzinnt, wobei die Schichtdicken vorzugsweise 30, 100 und 1000 und 1000 nm betragen. Nach dem Metallisieren wird die Glasfaser 8 stirnseitig gebrochen und mit dem angelöteten Verbindungsstück 9 in das Rohr 10 eingefädelt. Daraufhin wird das Verbindungsstück 9 über das Rohr 10 geschoben und mit diesem durch Löten verbunden.

Die Metallisierung hat den Vorteil, dass beim Löten kein Ablegieren auftritt. Zugleich bietet sie einen wirksamen mechanischen Schutz der Glasfaser bei der Handhabung.

Bei der Feinjustierung des Endes der Glasfaser 8 vor der PIN-Diode 2 ist das Verbindungsstück 9 am Rohr 10 in axialer Richtung der Glasfaser 8 bzw. in Richtung der Z-Achse leicht verschiebbar. Nachdem die Glasfaser 8 justiert und fixiert ist, wird das Verbindungsstück 9 mit dem Rohr 10 flussmittelfrei verlötet.

Bei der in Fig. 3 gezeigten Vorrichtung ist das Verbindungsstück 9 im Innern des Gehäuses 11 untergebracht. Diese Vorrichtung wird vorzugsweise nach dem folgenden Verfahren hergestellt:

Das Verbindungsstück 9 wird bereits bei der Herstellung des Gehäuses 11 auf das Rohr 10 innen auf der Innenseite des Gehäuses 11 angelötet. Anschliessend wird das ganze Gehäuse 11 vergoldet. Die Glasfaser 8 wird in die Durchführung, bestehend aus dem Rohr 10 und dem Verbindungsstück 9 eingefädelt, an der PIN-Fotodiode 2 justiert, fixiert und anschliessend an dem Verbindungsstück 9 verlötet.

Das in Verbindung mit der Herstellung der Vorrichtung nach Fig. 3 beschriebene Verfahren lässt sich vorteilhaft auch zur Herstellung der in Fig. 2 gezeigten Vorrichtung anwenden. Abgesehen davon, dass in diesem Fall das Verbindungsstück 9 zunächst anstatt im Innern ausserhalb des Gehäuses 11 angelötet wird, laufen die weiteren Verfahrensschritte dabei wie beschrieben ab.

Die in den Figuren dargestellte Empfangsvorrichtung enthält eine PIN-Fotodiode als Empfangsdiode. Bei einer Sendevorrichtung tritt an die Stelle der Empfangsdiode als Sendediode beispielsweise eine Laserdiode oder lichtemittierende Diode.

**Patentansprüche**

1. Sende- und/oder Empfangsvorrichtung für Einrichtungen der elektrooptischen Nachrichtenübertragung, mit einer elektrische Schaltmittel enthaltenden Anordnung, die in einem Metallgehäuse (11) untergebracht ist und mit einer Durchführung eines als Glasfaser (8) ausgebildeten Lichtwellenleiters durch eine Aussenwand des Metallgehäusess (11), dadurch gekennzeichnet, dass in die Aussenwand des Metallgehäuses (11) zur hermetisch dichten Durchführung der Glasfaser (8) ein metallenes Rohr (10) eingesetzt ist und dass auf das Rohr (10) ein metallenes, muffenförmiges Reduzier-Verbindungsstück (9) aufgesetzt ist, das auf seiten des grösseren Innendurchmessers mit der Aussenfläche des Rohres und auf seiten des kleineren Innendurchmessers mit der durch das Verbindungsstück (9) und durch das Rohr (10) hindurchgeführten und wenigstens im Bereich des Verbindungsstückes (9) metallisierten Glasfaser (8) mittels Lötverbindungen (72, 73) hermetisch dicht verbunden ist.

2. Sende- und/oder Empfangsvorrichtung nach Anspruch 1, dadurch gekennzeichnet, dass der grössere Innendurchmesser des Verbindungsstückes (9) derart bemessen ist, dass es vor dem Verlöten auf dem Rohr (10) leicht verschiebbar ist.

3. Sende- und/oder Empfangsvorrichtung nach Anspruch 1 oder 2, dadurch gekennzeichnet, dass das Verbindungsstück (9) ausserhalb des Gehäuses (11) auf das Rohr (10) aufgesetzt ist.

4. Sende- und/oder Empfangsvorrichtung nach Anspruch 1 oder 2, dadurch gekennzeichnet, dass das Verbindungsstück (9) im Inneren des Gehäuses (11) auf das Rohr (10) aufgesetzt ist.

5. Verfahren zur Herstellung einer Sende- und/oder Empfangsvorrichtung nach Anspruch 3, dadurch gekennzeichnet, dass das Verbindungsstück (9) zuerst an der Glasfaser (8) angelötet wird und dass die vorbereitete Glasfaser (8) in das Rohr (10) eingefädelt und das Verbindungsstück (9) über das Rohr (10) geschoben wird und dass das Verbindungsstück (9) nach Justierung und Fixierung der Glasfaser (8) im Gehäuse (11) mit dem Rohr (10) flussmittelfrei verlötet wird.

6. Verfahren zur Herstellung einer Sende- und/oder Empfangsvorrichtung nach Anspruch 3 oder 4, dadurch gekennzeichnet, dass das Verbindungsstück (9) bei der Herstellung des Gehäuses (11) auf das Rohr (10) aufgesetzt und angelötet wird und dass die Glasfaser (8) in das Rohr (10) eingefädelt und nach Justierung im Gehäuse (11) fixiert wird und dass die Glasfaser (8) nach der Fixierung an dem Verbindungsstück (9) verlötet wird.

7. Verfahren zur Herstellung einer Sende- und/oder Empfangsvorrichtung nach Anspruch 6, dadurch gekennzeichnet, dass das ganze Gehäuse (11) nach dem Anlöten des Verbindungsstücks (9) an das Rohr (10) vergoldet wird.

8. Verfahren zur Herstellung einer Sende- und/oder Empfangsvorrichtung nach einem der Ansprüche 1 bis 7, dadurch gekennzeichnet, dass die Metallisierung der Glasfaser in mehreren Schichten aufgebracht wird, wobei auf eine Chromschicht eine Platinschicht und auf diese eine Goldschicht und eine Schicht aus einer Zinn-Blei-Legierung folgen.

**Claims**

1. Transmitting and/or receiving apparatus for opti-electrical communications equipment, comprising an arrangement which includes electrical switching means and is accommodated in a metal housing (11), and a light waveguide in the form of a glass fibre (8) is led through an outer wall of the metal housing (11), characterised in that, in order that the glass fibre (8) may be led through in hermetically-sealed fashion, a metal pipe (10) is inserted into the outer wall of the metal housing (11); and that a sleeve-shaped, metal reducing-connecting piece (9) is placed on the pipe (10) where, at its end having the larger internal diameter, the reducing-connecting piece (9) is connected to the outer surface of the pipe and at its end having the smaller internal diameter, it is connected in hermetically-sealed manner to the glass fibre (8) which is led through the connecting piece (9) and the pipe (10) and, at least in the region of the connecting component (9), is metallised, by means of solder connections (72, 73).

2. Transmitting and/or receiving apparatus as claimed in claim 1, characterised in that the larger internal diameter of the connecting piece (9) is arranged to be such that prior to soldering, the connecting piece can easily be displaced on the pipe (10).

3. Transmitting and/or receiving apparatus as claimed in claim 1 or claim 2, characterised in that the connecting piece (9) is placed on the pipe (10) outside the housing (11).

4. Transmitting and/or receiving apparatus as claimed in claim 1 or claim 2, characterised in that the connecting piece (9) is placed on the pipe (10) inside the housing (11).

5. A method of producing a transmitting and/or receiving apparatus as claimed in claim 3, characterised in that the connecting piece (9) is first soldered to the glass fibre (10); that the prepared glass fibre (8) is threaded in the pipe (10) and the connecting piece (9) is placed over the pipe (10); and that, after the adjustment and fixing of the glass fibre (8) in the housing (11), the connecting piece (9) is soldered to the pipe (10) without the use of a flux.

6. A method of producing a transmitting and/or receiving apparatus as claimed in claim 3 or claim 4, characterised in that during the production of the housing (11), the connecting piece (9) is placed on the pipe (10) and soldered to it; that the glass fibre (8) is threaded in the pipe (10) and, after adjustment, is fixed in the housing (11); and that after the fixing step, the glass fibre (8) is soldered to the connecting piece (9).

7. A method of producing a transmitting and/or receiving apparatus as claimed in claim 6, characterised in that, after the soldering of the connecting piece (9) to the pipe (10), the entire housing (11) is gold-plated.

8. A method of producing a transmitting and/or receiving apparatus as claimed in one of claims 1 to 7, characterised in that the metallisation of the glass fibre is applied in a plurality of layers, a chromium layer being followed by a platinum layer which is in turn followed by a gold layer and a layer consisting of a tin-lead alloy.

## Revendications

1. Dispositif d'émission et/ou de réception pour des installations de transmission de communications par voie électro-optique, comportant un agencement, incluant les moyens électriques de commutation, qui est logé dans un boîtier métallique (11), ainsi qu'une traversée, passant par un paroi extérieure du boîtier métallique (11), pour un guide d'ondes de lumière réalisé sous la forme d'une fibre optique (8), caractérisé par le fait que dans la paroi extérieure du boîtier métallique (11), et en vue d'assurer une traversée hermétiquement étanche de la fibre de verre (8), on met en place un tube métallique (10) et que sur le tube (10) on monte une pièce de liaison de réduction (9), métallique et de la forme d'un manchon, laquelle pièce de liaison est reliée de façon hermétiquement étanche du côté du plus grand diamètre intérieur à la surface extérieure du tube et du côté du plus petit diamètre intérieur à la fibre de verre (8) passant par la pièce de liaison (9) et par le tube (10) et qui est métallisée au moins dans la partie intéressant la pièce de liaison, à l'aide de liaisons par soudure (72, 73).

2. Dispositif d'émission et/ou de réception selon la revendication 1, caractérisé par le fait que le plus grand diamètre intérieur de la pièce de liaison (9) est dimensionné de telle façon que celle-ci peut être déplacée facilement sur le tube (10), avant la soudure.

3. Dispositif d'émission et/ou de réception selon la revendication 1 ou 2, caractérisé par le fait que la pièce de liaison (9) est montée sur le tube (10), à l'extérieur du boîtier (11).

4. Dispositif d'émission et/ou de réception selon la revendication 1 ou 2, caractérisé par le fait que la pièce de liaison (9) est montée sur le tube (10) à l'intérieur du boîtier.

5. Procédé pour réaliser un dispositif d'émission et/ou de réception selon la revendication 3, caractérisé par le fait que la pièce de liaison (9) est d'abord soudée à la fibre de verre (8) et que la fibre de verre (8) qui a été préparée, est enfilée dans le tube (10) et que la pièce de liaison (9) est engagée sur le tube (10), et que la pièce de liaison (9), après l'ajustage et la fixation de la fibre de verre (8) dans le boîtier (11) est soudée au tube (10) sans utilisation d'un flux.

6. Procédé pour la réalisation d'un dispositif d'émission et/ou de réception selon la revendication 3 ou 4, caractérisé par le fait que la pièce de liaison (9) est, lors de la fabrication du boîtier (11), montée et soudée sur le tube (8), et que la fibre de verre (8) est enfilée dans le tube (10) et est fixée dans le boîtier (11), après ajustage, et que la fibre de verre (8) est soudée, après fixation, à la pièce de liaison (9).

7. Procédé pour la réalisation d'un dispositif d'émission et/ou de réception selon la revendication 6, caractérisé par le fait que la totalité du boîtier (10) est dorée après la soudure de la pièce de liaison (9) avec le tube (10).

8. Procédé pour réaliser un dispositif d'émission et/ou de réception selon l'une des revendications 1 à 7, caractérisé par le fait que la métallisation de la fibre de verre est déposée en plusieurs couches, une couche de chrome étant suivie d'une couche de platine et que sur celle-ci suivent une couche d'or et une couche en un alliage à l'étain et au plomb.

# FIG 1

0 111264

0111264

# FIG 2

# FIG 3